# EUROPÄISCHE PATENTSCHRIFT

(11) **EP 1 433 233 B1**
(45) Veröffentlichungstag und Bekanntmachung des Hinweises auf die Patenterteilung: **20.07.2005**
(21) Anmeldenummer: 02774409.3
(22) Anmeldetag: 25.09.2002
(51) Int. Cl.: H02B 1/052

(54) **VORRICHTUNG UND ANORDNUNG ZUR BEFESTIGUNG EINES PROFILTEILS AN EINER TRAGSCHIENE**
DEVICE AND ARRANGEMENT FOR FIXING A PROFILED PART TO A BEARING RAIL
DISPOSITIF ET SYSTEME POUR FIXER UN ELEMENT PROFILE A UN RAIL PORTEUR

(30) Priorität: 02.10.2001 DE 10148623
(43) Veröffentlichungstag der Anmeldung: 30.06.2004
(73) Patentinhaber: SIEMENS AKTIENGESELLSCHAFT, 80333 München (DE)
(72) Erfinder: APFELBACHER, Walter, 92271 Freihung (DE); REICHENBACH, Norbert, 92224 Amberg (DE); SEITZ, Johann, 92224 Amberg (DE)
(86) Internationale Anmeldenummer: PCT/DE2002/003616
(87) Internationale Veröffentlichungsnummer: WO 2003/032456

(56) Entgegenhaltungen:
- DE-A- 19 604 218
- FR-A- 2 211 993
- US-A- 5 598 322

## Beschreibung

Die Erfindung betrifft eine Vorrichtung und eine Anordnung zur Befestigung eines Kühlkörpers an einer Tragschiene gemäß Patentanspruch 1 bzw. Patentanspruch 9.

Aus der DE 295 06 579 U1 ist eine Anordnung zur Befestigung elektrischer Geräte auf Tragschienen bekannt, bei der die elektrischen Geräte einen Sockelboden mit unter Federdruck stehenden Rast-Befestigungsmitteln aufweisen, mittels derer das elektrische Gerät auf das vorgegebene Profil der Tragschienen aufschnappbar und gegebenenfalls von dieser wieder lösbar ist.

Die US 5 598 322 A offenbart ein System zur Leistungssteuerung, welches einen Kühlkörper aufweist und auf einer DIN-Schiene montierbar ist. Der Kühlkörper hat angeformte Schienenbauteile, die eine darin einschiebbare Unterboden-Baugruppe halten. Die Unterboden-Baugruppe besteht aus einem Unterboden und einem beweglichen Schieber, mittels derer der Kühlkörper auf einer DIN-Schiene befestigt werden kann.

Aus der DE 196 04 218 A1 ist ein Heizgerät mit einem Profilkontaktkörper bekannt, bei dem Befestigungselemente in T-förmige Nuten einer Abschlusswand des Profilkontaktträgers eingeschoben werden können. Die Befestigungselemente dienen zur Rastbefestigung des Heizgeräts an einer genormten Hutschiene.

Es ist die Aufgabe der vorliegenden Erfindung eine Vorrichtung und eine Anordnung zur Befestigung eines Kühlkörpers an einer Tragschiene anzugeben, die einfach und kostengünstig aufgebaut sind.

Diese Aufgabe wird hinsichtlich der eingangs genannten Vorrichtung erfindungsgemäß durch die Merkmale des Anspruchs 1 und hinsichtlich der eingangs genannten Anordnung erfindungsgemäß durch die Merkmale des Anspruchs 9 gelöst; vorteilhafte Ausgestaltungen der Vorrichtung und der Anordnung sind Gegenstand der Ansprüche 2 bis 8 bzw. 10 bis 12.

Die Vorrichtung zur Befestigung eines Kühlkörpers an einer Tragschiene dient insbesondere als alleiniges und somit als einfach und kostengünstig herstellbares Verbindungselement mit zugehörigen, anpassbaren und mit Längsprofilen der Tragschiene bzw. des Kühlkörpers korrespondierenden Befestigungsmitteln, mit deren Hilfe vorgegebene Konturen der zu verbindenden Bauteile - Kühlkörper und Tragschiene - veränderungsfrei zur Befestigung nutzbar gemacht werden.

Mit Vorteil ist eine Anbringung der ersten Befestigungsmittel an einer ersten Seite des Verbindungselements und eine Anbringung der zweiten Befestigungsmittel an einer der ersten gegenüberliegenden zweiten Seite des Verbindungselements gegeben. Hierbei kann mit nur einem als Bindeteil zwischen dem Kühlkörper einerseits und der Tragschiene andererseits angeordnetem Verbindungselement besonders einfach die Verbindung zur Tragschiene und zum Kühlkörper hergestellt werden.

Vorteilhafterweise sind die Befestigungsmittel als Einsteck-, Einschub-, Schnapp- oder Rastmittel ausgebildet, die zu bautypisch vorgegebenen Längsprofilen der Tragschiene bzw. des Kühlkörpers korrespondieren. Dadurch ist trotz unverändert hinnehmbarer Profile der Tragschiene und/oder des Kühlkörpers ein hoher Grad an Flexibilität hinsichtlich der Handhabbarkeit beim Verbinden der Bauteile - Kühlkörper und Tragschiene - gegeben.

Vorzugsweise sind die ersten Befestigungsmittel im Sinne einer klammerartigen formschlüssigen Umfassung des Kühlkörpers, insbesondere einer Kühlrippe des als Profilteil vorgesehenen Kühlkörpers, ausgebildet. Hierdurch ist es auch möglich, im Strangpressverfahren hergestellte Profilteile - mit ausschließlich in Pressrichtung eingebrachten Formgebungen und Konturen - mit der Tragschiene ohne Notwendigkeit einer Anpassungsänderung zu verbinden.

In einer bevorzugten Ausgestaltung ist zumindest eine Raste oder zumindest ein Anschlag an dem Verbindungselement angeordnet, derart dass der Kühlkörper geführt durch die Einsteck-, Einschub-, Schnapp- oder Rastmittel bei einer Bewegung in Längsrichtung des Verbindungselements in seiner Montageendstellung fixierbar ist. Hierbei kann ein Kühlkörper selbst dann arretiert, lagefixiert oder gehaltert werden, wenn es sich auf Grund der Lage des Verbindungselements und der einwirkenden Gravitationskraft ansonsten selbsttätig lösen könnte.

Vorteilhafterweise ist das Verbindungselement mit einer durchgehenden Fläche zu der Tragschiene hin versehen, so dass einerseits eine zu gewährleistende Isolation gegeben ist und andererseits eine unmittelbar elektrisch leitende Verbindung vermieden werden kann.

Zweckmäßigerweise ist eine einstückige Anformung der Befestigungsmittel an das Verbindungselement gegeben, welche beispielsweise mittels Spritzguastechnik hergestellt werden kann. Eine damit einhergehende Einsparung an Fertigungsmitteln oder eine Reduzierung von Baukomponenten für mehrteilige Befestigungsmittel wird somit ebenfalls machbar.

Die Anordnung zur Befestigung eines Kühlkörpers an einer Tragschiene dient insbesondere durch die daraus resultierende gegenseitige räumliche Beziehung als einfache und kostengünstige verbindungseinheit, mit deren Hilfe gegebene Konturen der zu verbindenden Bauteile - Kühlkörper und Tragschiene - veränderungsfrei zur Befestigung nutzbar gemacht werden.

Vorteilhafterweise ist das Verbindungselements im wesentlichen quer zu bautypisch vorgegebenen Längsprofilen der Tragschiene bzw. des Kühlkörpers angebracht. Dadurch lassen sich schmal ausgeführte Kühlkörper platzsparend nebeneinander anreihen und als Bindeteile einfach montieren.

In einer bevorzugten Ausgestaltung ist der als Profilteil vorgesehene Kühlkörper mit quer zu dem Verbindungselement verlaufenden Kühlrippen, insbesondere zur Kühlung eines elektrischen Bauteils, ausgebildet, so dass auf einfache Weise eine gegebene Form des Kühlkörpers zum Zusammenfügen mit dem Verbindungselement genutzt werden kann.

Vorteilhafterweise kann der Kühlkörper'und das elektrische Bauteil zu einer Montage-Baueinheit zusammengefasst werden, wobei eine eigene Vorrichtung zur Befestigung für das elektrische Gerät eingespart und in vorteilhafter Weise gerätegenerierte Wärme über den Kühlkörper abgeleitet werden kann.

Die Erfindung sowie die vorteilhaften Ausgestaltungen gemäß der Merkmale der Unteransprüche werden im folgenden anhand der Zeichnung und der darin dargestellten Ausführungsbeispiele näher erläutert. Darin zeigen:

Die Erfindung sowie die vorteilhaften Ausgestaltungen gemäß der Merkmale der Unteransprüche werden im folgenden anhand der Zeichnung und der darin dargestellten Ausführungsbeispiele näher erläutert. Darin zeigen:
- FIG 1: eine Vorrichtung und eine Anordnung zur Befestigung eines Kühlkörpers an einer Tragschiene mittels eines Verbindungselements sowie einer Raste in einer ersten räumlichen Darstellung,
- FIG 2: eine Vorrichtung und eine Anordnung schematisch gemäß FIG 1 in einer Draufsicht,
- FIG 3: eine Vorrichtung und eine Anordnung gemäß FIG 1 in einer zweiten räumlichen Darstellung, und
- FIG 4: eine Vorrichtung und eine Anordnung gemäß FIG 1 mit einer weiteren Ausgestaltung der Raste in einer räumlichen Darstellung.

Im nachfolgenden Text sind gleiche Teile der Figuren mit gleichen Bezugszeichen versehen.

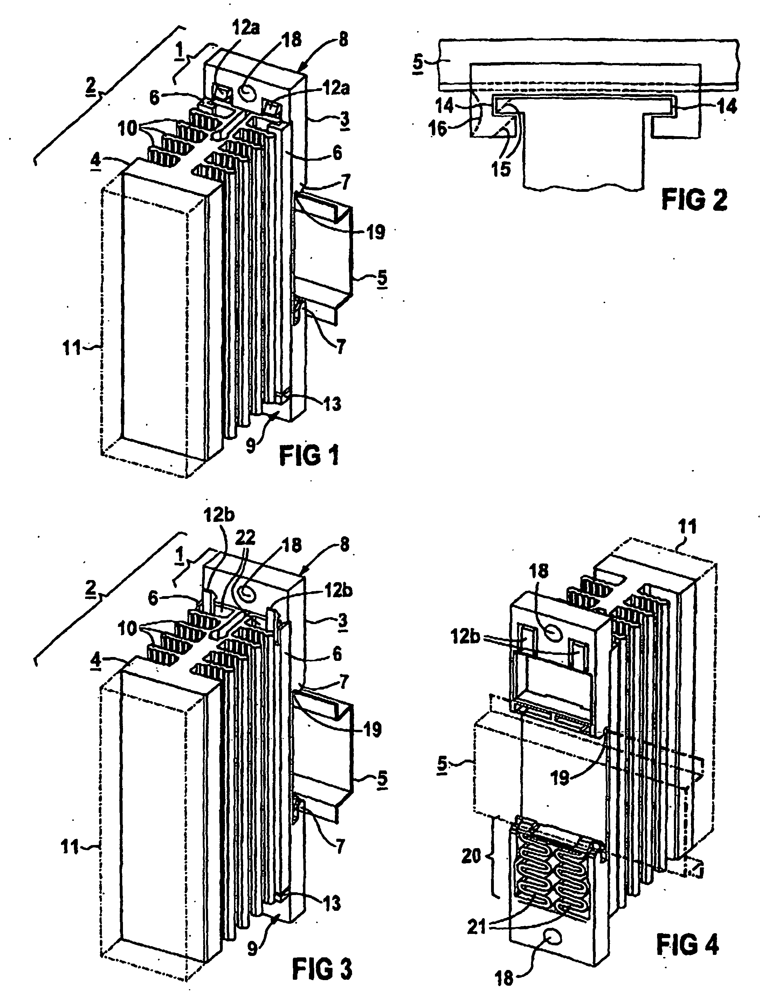

In FIG 1 ist eine Vorrichtung 1 und eine Anordnung 2 mit einem adapterartigen diskreten Verbindungselement 3 zur Befestigung eines Kühlkörpers 4 an einer Tragschiene 5 gezeigt.
Das Verbindungselement 3 weist mit dem Kühlkörper 4 in Verbindung stehende erste Befestigungsmittel 6 sowie mit der Tragschiene 5 in Verbindung stehende zweite Befestigungsmittel 7 auf. Die ersten Befestigungsmittel 6 sind an einer ersten Seite 8 des Verbindungselements 3 und die zweiten Befestigungsmittel 7 an einer der ersten gegenüberliegenden zweiten Seite 9 des Verbindungselements 3 angebracht. Das Verbindungselements 3 ist dabei im wesentlichen quer zu bautypisch vorgegebenen Längsprofilen der Tragschiene 5 bzw. des Kühlkörpers 4 angebracht.

Zudem sind an das Verbindungselement 3 die Befestigungsmittel 6,7 einstückig angeformt. Demnach kann mit.nur einem Verbindungselement, insbesondere aus Kunststoff, sowohl eine Verbindung zum Kühlkörper 4 als auch die Verbindung zur Tragschiene 5 hergestellt werden. Vorteilhafterweise werden hierbei keine besonderen Montage- oder Befestigungstechniken benötigt, so dass ein hoher Automatisierungsgrad und folglich ein günstiges Verbindungselement gegeben ist.

Im Allgemeinen werden das Verbindungselement 3 und seine Befestigungsmittel 6,7 an die Formen und Konturen der zu befestigenden Bauteile - Kühlkörper 4 und Tragschiene 5 angepasst. Die dabei entstehenden komplexen Befestigungsmittel 6,7 in Form von Einsteck-, Einschub-, Schnapp- oder Rastmitteln können auf einfache Weise als Kunststoff-Formteil, insbesondere als Kunststoff-Spritzgussteil, hergestellt werden, was bei dem Kühlkörper 4.

Ferner weist das Verbindungselement 3 - alternativ auch eines der Befestigungsmittel 6,7 - zumindest erste Rasten 12a bzw. einen oder mehrere Anschläge 13 auf. Die ersten Rasten 12a sind einführungsseitig federnd im Verbindungselement 3 integriert und ermöglichen durch ihre angefasten Enden, dass der Kühlkörper 4 daran angesetzt werden kann. Ggf. kann auch nur eine einzelne der ersten Rasten 12a zum Einsatz kommen. Der Anschlag 13 ist endseitig im Verbindungselement 3 fest oder entnehmbar angebracht. Die ersten Rasten 12a und/oder der Anschlag 13 sind derart ausgebildet und positioniert, dass der Kühlkörper 4 geführt durch die Einsteck-, Einschub-, Schnapp- oder Rastmittel bei einer Bewegung in Längsrichtung des Verbindungselements 3 in seiner Montageendstellung fixierbar ist. Dadurch wird ein Herausgleiten des Kühlkörpers 4 wirksam verhindert.

Der Kühlkörper 4 ist mit quer zu dem Verbindungselement 3 verlaufenden Kühlrippen 10 zur Kühlung eines elektrischen Bauteils 11 ausgebildet. Hierbei können an den, meist im Strangpreseverfahren hergestellten Kühlkörpern, in Pressrichtung eingebrachten Formen und Konturen ohne Modifikationen vorteilhaft zur Befestigung genutzt werden. Gegebenenfalls kann eine der Kühlrippen 10 in ihren Abmessungen an das Verbindungselement 3 angepasst, gegebenenfalls in ihrer Gussbreite im Hinblick auf die jeweilige Baubreite des Verbindungselements 3, reduziert werden.

Darüber hinaus ist in einer vorteilhaften Ausgestaltung der Kühlkörper und das elektrische Gerät 11 zu einer Montage-Baueinheit zusammengefasst. Die Zusammenfassung kann steckbar, einschiebbar oder auf eine äquivalente Weise ausgeführt werden. Das Verbindungselement 3 kann in unterschiedlichen Baubreiten, insbesondere in den Baubreiten 17,5 mm, 22, 5 mm und 45 mm und vorzugsweise in einer Baubreite, die ≤ der Baubreite des elektrische Bauteil 11 entspricht, ausgebildet werden.

Bei dem elektrischen Bauteil 11 kann es sich um ein elektronisches Schütz, ein Halbleiterelais, eine ohmsche Last, ein Reiheneinbaugerät, ein Gerät der Leistungselektronik oder ein ähnliches Bauteil oder Gerät handeln. Der daraus resultierende Vorteil besteht darin, dass zur Befestigung eines Gerätes und/oder eines Kühlkörpers an einer Tragschiene gegebenenfalls notwendige Zusatzteile aus Metall und/oder Kunststoff und folglich auch damit einhergehende Fügeoperationen, wie beispielsweise Schrauben oder Verstemmen, vermieden werden können. Folglich reduzieren sich korrelierende Arbeitsgänge und Herstellungskosten.

Die Tragschiene 5 dient als Bindeglied zur Befestigung des daran gekoppelten Verbindungselements 3, beispielsweise auf einer Montageplatte eines Schaltschrankes, wobei unterschiedliche Tragschienenprofile eingesetzt werden können.

In FIG 2 ist die Vorrichtung 1 und die Anordnung gemäß FIG 1 in einer Draufsicht schematisch gezeigt. Die Vorrichtung 1 und die Anordnung 2 verbinden dabei einerseits die Tragschiene 5 und andererseits den Kühlkörper 4 miteinander bzw. stellen deren räumliche Beziehung zueinander dar. Die zu dem Verbindungselement 3 zugehörigen ersten Befestigungsmittel 6 sind hierbei als Einsteck-, Einschub-, Schnapp- oder Rastmittel ausgebildet, welches zu bautypisch vorgegebenen Längsprofilen der Tragschiene 5 bzw. des Kühlkörpers 4 korrespondiert.

Ferner sind die ersten Befestigungsmittel 6 mit seitlichen Führungen 14 im Sinne einer klammerartigen formschlüssigen Umfassung des Kühlkörpers 4, insbesondere einer Kühlrippe 10 ausgebildet. Begünstigend wirken beim Verbindungsvorgang zwischen dem Kühlkörper 4 und dem Verbindungselement 3 zumindest eine vorsehbare Anfasung 15 und/oder eine Wandungsreduzierung 16, so dass alternativ zu einem Einsteck- oder Einschub- ein Schnapp- oder Rastvorgang ermöglicht und erleichtert wird.

In FIG 3 ist die Vorrichtung 1 und die Anordnung 2 gemäß FIG 1 in einer zweiten räumlichen Darstellung gezeigt. Das Verbindungselement 3 weist hierbei zumindest eine Befestigungsöffnung 18 auf, welche mittels herkömmlichen Schrauben, Nieten oder dergleichen als Alternative zu dem zweiten Befestigungsmittel 7 in Verbindung mit der Tragschiene 5 dienen kann. Die zweiten Befestigungsmittel 7 weisen ihrerseits an einer ersten Stelle eine Nut 19 auf, welche die Tragschiene 5 an einer Seite aufnehmen und führen kann.

Ferner sind die zweiten Befestigungsmittel 7 an einer der ersten Stelle gegenüberliegenden zweiten Stelle einstückig mit einem Rastmechanismus 20 mit einer am Verbindungselement 3 angespritzten Feder 21 versehen, wodurch ein Aufschnappen auf der Tragschiene 5 ermöglicht ist. Die zweiten Befestigungsmittel 7 können demnach als Einsteck-, Einschub-, Schnapp- oder Rastmittel dienen und fixieren das Verbindungselement 3 und/oder den Kühlkörper 4 und/oder das elektrische Gerät 11 auf der Tragschiene 5.

Das Verbindungselement 3 weist eine durchgehende Fläche zu der Tragschiene 5 hin auf, so dass eine leitende Verbindung oder eine partielle Isolation vermieden ist.

In FIG 3 und 4 ist die Vorrichtung 1 und die Anordnung 2 gemäß FIG 1 jeweils mit einer weiteren Ausgestaltung der ersten Rasten 12a in Form von zweiten Rasten 12b in einer räumlichen Darstellung gezeigt, wobei die zweiten Rasten 12b durch eine korrespondierende Aussparung 22 in einer Kühlrippe 10 des Kühlkörpers 4 eingreifen und diesen in seiner Montageendstellung fixieren.

## Patentansprüche

1. Vorrichtung (1) zur Befestigung eines Kühlrippen (10) aufweisenden Kühlkörpers (4) an einer Tragschiene (5),
- mit einem adapterartigen diskreten Verbiridungselement (3), das mit dem Kühlkörper (4) verbindbare erste Befestigungsmittel (6) sowie mit der Tragschiene (5) verbindbare zweite Befestigungsmittel (7) aufweist
- wobei die Befestigungsmittel (6, 7) zu bautypisch vorgegebenen Längsprofilen der Tragschiene (5) und zu einer der Kühlrippen (10) korrespondieren.

2. Vorrichtung nach Anspruch 1,
- mit einer Anbringung der ersten Befestigungsmittel (6) an einer ersten Seite (8) des Verbindungselements (3) und einer Anbringung der zweiten Befestigungsmittel (7) an einer der ersten gegenüberliegenden zweiten Seite (9) des Verbindungselements (3).

3. Vorrichtung nach einem der Ansprüche 1 oder 2,
- mit einer Ausbildung der Befestigungsmittel (6,7) als Einsteck-, Einschub-, Schnapp- oder Rastmittel.

4. Vorrichtung nach einem der Ansprüche 1 bis 3,
- mit einer Ausbildung der ersten. Befestigungsmittel (6) im Sinne einer klammerartigen formschlüssigen Umfassung der Ktlhlrippe (10).

5. Vorrichtung nach einem der Ansprüche 1 bis 4,
- mit zumindest einer Raste (12a, 12b) oder zumindest einem Anschlag (13) an dem Verbindungselement (3), derart dass der Kühlkörper (4) geführt durch die Einsteck-, Einschub-, Schnapp- oder Rastmittel bei einer Bewegung in Längsrichtung des Verbindungselements (3) in seiner Montageendstellung fixierbar ist.

6. Vorrichtung nach einem der Ansprüche 1 bis 5,
- mit einer Ausbildung des Verbindungselements (3) mit einer durchgehenden Fläche zu der Tragschiene (5) hin.

7. Vorrichtung nach einem der vorhergehenden Ansprüche,
- mit einer einstückigen Anformung der Befestigungsmittel (6,7) an das Verbindungselement (3).

8. Vorrichtung nach einem der vorhergehenden Ansprüche,
- mit einer Ausbildung des Verbindungselements (3) als Kunststoff-Formteil, insbesondere Kunststoff-Spritzgussteil.

9. Anordnung (2) zur Befestigung eines Kühlrippen (10) aufweisenden Kühlkörpers (4) an einer Tragschiene (5),
- mit einem adapterartigen diskreten Verbindungselement (3), welches erste und zweite Befestigungsmittel (6 bzw. 7) aufweist;
- mit einer Verbindung des Kühlkörpers (4) mit den ersten Befestigungsmitteln (6) und einer Verbindung der Tragschiene (5) mit den zweiten Befestigungsmittel (7),
- wobei die Befestigungsmittel (6,7) zu bautypisch vorgegebenen Längsprofilen der Tragschiene (5) und zu einer der Kühlrippen (10) korrespondieren.

10. Anordnung nach Anspruch 9,
- mit einer Anbringung des Verbindungselements (3) im wesentlichen quer zu bautypisch vorgegebenen Längsprofilen der Tragschiene (5) bzw. des Kühlkörpers (4).

11. Anordnung nach einem der Ansprüche 9 oder 10,
- mit einer Ausbildung des Kühlkörpers (4) mit quer zu dem Verbindungselement (3) verlaufenden Kühlrippen (10), insbesondere zur Kühlung eines elektrischen Bauteils (11).

12. Anordnung nach Anspruch 11,
- mit einer Zusammenfassung des Kühlkörpers und des elektrischen Bauteils (11) zu einer Montage-Baueinheit.

## Claims

1. Device (1) for fixing a cooling part (4) comprising cooling ribs (10) to a bearing rail (5),
- with an adapter-like discrete connector element (3), comprising a first fixing device (6) connectable to the cooling part (4) and second fixing device (7) connectable to the bearing rail (5)
- the fixing devices (6, 7) corresponding to structurally typical predetermined longitudinal profiles of the bearing rail (5) and to one of the cooling ribs (10).

2. Device according to Claim 1,
- in that the first fixing device (6) is attached to a first side (8) of the connector element (3) and the second fixing device (7) is attached to a second side (9) of the connector element (3), the second side being opposite the first side.

3. Device according to one of Claims 1 or 2
- the fixing devices (6, 7) being designed as plug-in, push-in, snap-action or latching means.

4. Device according to one of Claims 1 to 3
- the first fixing device (6) being designed to be clamp-like and form-fitting, surrounding the cooling rib.

5. Device according to one of Claims 1 to 4
- with at least one catch (12a, 12b) or at least one stop (13) arranged on the connector element (3) such that the cooling part (4), guided by the plug-in, push-in, snap-action or latching means, in the case of a movement in the longitudinal direction of the connector element (3) is fixable in its final installation position.

6. Device according to one of Claims 1 to 5,
- the connector element (3) being designed with a continuous surface in the direction of the bearing rail (5).

7. Device according to one of the preceding claims,
- the fixing devices (6, 7) being integrally formed on the connector element (3).

8. Device according to one of the preceding Claims,
- the connector element (3) being designed as a plastic moulding, in particular plastic injection moulding.

9. Arrangement (2) for fixing a cooling part (4) comprising a cooling rib (10) to a bearing rail (5)
- with an adapter-like discrete connector element (3), comprising a first and second fixing device (6 and/or 7),
- the cooling part (4) being connected to the first fixing means (6) and the bearing rail (5) being connected to the second fixing means (7),
- the fixing means (6, 7) corresponding to structurally typical predetermined longitudinal profiles of the bearing rails (5) and/or the cooling ribs (10).

10. Arrangement according to Claim 9,
- the connector element (3) being attached essentially transversely to the structurally typical predetermined longitudinal profiles of the bearing rails (5) and/or the cooling part (4).

11. Arrangement according to one of Claims 9 or 10,
- the cooling part (4) being designed with cooling ribs (10) running transversely to the connector element (3), in particular for cooling an electrical component (11).

12. Arrangement according to Claim 11,
- the cooling part and the electrical component (11) being combined to form an installation assembly.

## Revendications

1. Dispositif (1) pour fixer sur un rail (5) porteur un refroidisseur (4) comportant des ailettes (10) de refroidissement,
- comprenant un élément (3) d'assemblage discret, du type adaptateur, qui comporte des premiers moyens (6) de fixation pouvant être assemblés au refroidisseur (4) et des deuxièmes moyens (7) de fixation pouvant être assemblés au rail (5) porteur,
- sachant que les moyens (6, 7) de fixation correspondent à des profilés longitudinaux prescrits par le type de construction du rail (5) porteur, et à une des ailettes (10) de refroidissement.

2. Dispositif suivant la revendication 1,
- comportant une installation des premiers moyens (6) de fixation sur un premier côté (8) de l'élément (3) d'assemblage et une installation des deuxièmes moyens (7) de fixation sur un deuxième côté (9), opposé au premier côté, de l'élément (3) d'assemblage.

3. Dispositif suivant l'une des revendications 1 ou 2,
- comportant une réalisation des moyens (6, 7) de fixation sous la forme de moyens d'emboîtement, d'insertion, d'enclenchement ou de crantage.

4. Dispositif suivant l'une des revendications 1 à 3,
- comportant une réalisation des premiers moyens (6) de fixation au sens d'un embrassement positif, à la manière d'une pince, de l'ailette (10) de refroidissement.

5. Dispositif suivant l'une des revendications 1 à 4,
- comportant au moins un cran (12a, 12b) d'arrêt ou au moins une butée (13) sur l'élément (3) d'assemblage, de telle sorte que le refroidisseur (4), guidé par les moyens d'emboîtement, d'insertion, d'enclenchement ou de crantage, peut être immobilisé dans sa position finale de montage lors d'un déplacement dans la direction longitudinale de l'élément (3) d'assemblage.

6. Dispositif suivant l'une des revendications 1 à 5,
- comportant une réalisation de l'élément (3) d'assemblage avec une surface ininterrompue en direction du rail (5) porteur.

7. Dispositif suivant l'une des revendications précédentes,
- comportant une formation des moyens (6, 7) de fixation d'un seul tenant sur l'élément (3) d'assemblage.

8. Dispositif suivant l'une des revendications précédentes,
- comportant une réalisation de l'élément (3) d'assemblage sous la forme d'une pièce moulée en matière plastique, en particulier d'une pièce moulée par injection de matière plastique.

9. Système (2) pour fixer sur un rail (5) porteur un refroidisseur (4) comportant des ailettes (10) de refroidissement,
- comprenant un élément (3) d'assemblage discret, du type adaptateur, qui comprend des premiers et des deuxièmes moyens (6 ou 7) de fixation ;
- comprenant un assemblage du refroidisseur (4) aux premiers moyens (6) de fixation et un assemblage du rail (5) porteur aux deuxièmes moyens (7) de fixation,
- sachant que les moyens (6, 7) de fixation correspondent à des profilés longitudinaux prescrits par le type de construction du rail (5) porteur et à une des ailettes (10) de refroidissement.

10. Système suivant la revendication 9,
- comportant une installation de l'élément (3) d'assemblage sensiblement transversalement aux profilés longitudinaux donnés prescrits par le type de construction du rail (5) porteur ou respectivement du refroidisseur (4).

11. Système suivant l'une des revendications 9 ou 10,
- comportant une réalisation du refroidisseur (4) avec des ailettes (10) de refroidissement s'étendant transversalement à l'élément (3) d'assemblage, en particulier pour le refroidissement d'un composant (11) électrique.

12. Système suivant la revendication 11,
- comportant le regroupement du refroidisseur et du composant (11) électrique en un module de montage.
